(19) **Europäisches Patentamt / European Patent Office / Office européen des brevets**

(11) **EP 3 798 579 B1**

(12) **EUROPEAN PATENT SPECIFICATION**

(45) Date of publication and mention
of the grant of the patent:
**07.05.2025 Bulletin 2025/19**

(21) Application number: **20208216.0**

(22) Date of filing: **26.05.2017**

(51) International Patent Classification (IPC):
**G01C 21/34** *(2006.01)*     **G01C 21/36** *(2006.01)*
**B60L 58/12** *(2019.01)*     **B60L 1/02** *(2006.01)*

(52) Cooperative Patent Classification (CPC):
**G01C 21/3469; B60L 58/12; G01C 21/3415;
G01C 21/3697;** B60L 1/02; B60L 2240/622;
B60L 2240/642; B60L 2250/10; B60L 2250/16;
B60L 2260/52; B60L 2260/54; Y02T 10/70;
Y02T 10/72; Y02T 90/16

(54) **NAVIGATION SUPPORT METHOD AND DEVICE OF A BATTERY-ELECTRIC VEHICLE**

VERFAHREN UND VORRICHTUNG ZUR NAVIGATIONSUNTERSTÜTZUNG EINES
BATTERIE-ELEKTRISCHEN FAHRZEUGS

PROCÉDÉ DE SUPPORT DE NAVIGATION ET DISPOSITIF D'UN VÉHICULE ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.05.2016 IT UA20163842**

(43) Date of publication of application:
**31.03.2021 Bulletin 2021/13**

(62) Document number(s) of the earlier application(s) in
accordance with Art. 76 EPC:
**17173151.6 / 3 249 359**

(73) Proprietor: **Iveco S.p.A.
10156 Torino (IT)**

(72) Inventors:
• **MANTOVANI, Giorgio
16148 Genova (IT)**
• **PERRONE, Attilio
16010 Serra Ricco' (GE) (IT)**
• **AIMO BOOT, Marco
10072 Caselle Torinese (TO) (IT)**

(74) Representative: **Studio Torta S.p.A. et al
Via Viotti, 9
10121 Torino (IT)**

(56) References cited:
EP-A1- 2 741 052         WO-A1-2015/022555
DE-A1- 102014 221 062    US-A1- 2014 121 956
US-A1- 2015 286 965

• MOURE ET AL: "Range estimator for electric
vehicles", 2013 WORLD ELECTRIC VEHICLE
SYMPOSIUM AND EXHIBITION (EVS27), IEEE, 17
November 2013 (2013-11-17), pages 1 - 15,
XP032654245, DOI: 10.1109/EVS.2013.6914917

EP 3 798 579 B1

Processed by Luminess, 75001 PARIS (FR)

## Description

<u>Technical field of the invention</u>

The invention relates to the field of vehicle navigation systems.

<u>Known state of the art</u>

Known navigation systems offer a few options to change the selection of a path. The most common ones are shortest path and fastest path. Furthermore, you can choose or avoid road sections of roads subjected to toll payment.

Battery-electric vehicles have a very limited range compared to vehicles provided with an internal combustion engine and, furthermore, the number of stations that can be used to charge the batteries are limited and the time needed for a charging stop is much longer than the refuelling of a fossil fuel.

Therefore, the mere calculation of a route is not sufficient, as it does not take into account the peculiarities and the limits of electric vehicles as well as possible charging needs.

WO2015/022555A1 discloses a method for monitoring and navigating a vehicle with electric drive towards a target with an off-line navigation device, in which the remaining route leading to the target is divided into a plurality of road sections to which respective weighted costs are associated.

A scientific article in the name of Moure et al entitled "Range estimator for electric vehicles" in proceedings of 2013 World Electric Vehicle Symposium and Exhibition (EVS27), IEEE, 17 November 2013, pages 1-15 discloses a further method based on a division of the road into smaller sections for the prediction of the remaining range of an electric vehicle.

<u>Summary of the invention</u>

The object of the invention is to provide a method to calculate a route that better suits the features of an electric vehicle.

The idea on which the invention is based is that of allowing the system for the estimation of the residual range of an electric vehicle to dialogue with a vehicle navigation system, so as to better consider the reduced capacity of the vehicle batteries.

Therefore, the idea comprises a step of estimating a residual range of the electric vehicle, of calculating a route for a predetermined destination and of virtually correcting the length thereof based on the relative altimetry variations. In particular, the method takes into account the total altimetry variation only if it is positive. Preferably, the method may, in addition, take into account local altimetry variations relating to the portions producing a zero resultant, namely those portions that take the vehicle back to the same height/altitude that there was before the road section comprising said altimetry variation.

According to a preferred embodiment of the invention, immediately before warning the driver that he/she needs to make a charging stop, the navigator checks whether, by setting a vehicle configuration with lower consumption and reduced performances (ecodrive), said second distance is smaller than said range, which is also expressed as a distance; in case of a positive answer, said navigator optionally informs the driver that he/she can start the navigation along said route with lower consumption.

Preferably, after having checked the availability of charging stations, the navigator shows the journey times in relation to the type of route - route with minimum consumption or shortest route - also taking into account the charging times, preferably taking into account the features of the charging station and the possible waiting times before being able to actually have access to the charging station. Preferably, the driver is allowed to decide whether to choose the navigation through the fastest path or the path with minimum consumption (or shortest path) and, in the last case, whether in standard mode or in eco-drive mode.

The method to calculate a fastest path, namely a path that requires less time, and a path with lower consumption, namely a path that covers less road, are known.

However, the result obtained by so doing is corrected according to the description above.

In the so-called eco-drive mode, compared to a standard configuration, for example, the power delivered by the electric motor is reduced and/or the air conditioning system is weakened or even disabled, as well as other on-board devices, such as for example the sound system, the electric outlets of the vehicle, etc..

It should be pointed out that, in the aforesaid comparisons, it is preferable to consider a guard margin, for example 10 or 20 km. Therefore, the residual range of the vehicle is compared with the distance to be covered, to which said guard margin is added.

Preferably, the navigator, besides comprising maps as well as information on the types of roads, altitude variations, etc., also comprises information of the location of the battery charging stations. According to a preferred embodiment of the invention, the navigator has also stored information on the power that can be delivered to each charging vehicle and adjusts the aforesaid calculation of the journey times based on the actual charging time, which is a function of said deliverable power and of the capacity of the batteries installed on board the vehicle.

According to a further preferred embodiment of the invention, which can be combined with the previous ones, the navigator comprises a telematics connection and, when the driver selects the preferred type of path, if it needs at least one charging stop, the navigator is configured to proceed automatically, if the charging station allows it to do so, to book a charging position for the time in which the station will be reached by the vehicle.

The subject-matter of the invention is a navigation support method of an electric vehicle.

A further subject-matter of the invention is a navigation support device of an electric vehicle implementing the aforesaid method.

A further subject-matter of the invention is an electric vehicle comprising the aforesaid vehicle navigator.

The invention is defined in the independent claims. The dependent claims describe preferred embodiments of the invention, thus forming an integral part of the description.

Brief description of the figures

Further objects and advantages of the invention will be best understood upon perusal of the following detailed description of an embodiment thereof (and of relative variants) with reference to the accompanying drawings merely showing non-limiting examples, wherein:

    figure 1 shows a diagram indicating corrective coefficients to correct a length of a previously calculated route based on a percentage slope;
    figure 2 shows a block diagram of a preferred embodiment of the method according to the invention;
    figure 3 shows a block diagram of a preferred embodiment of the method to calculate a residual range;
    figure 4 shows in detail a block of figure 3;

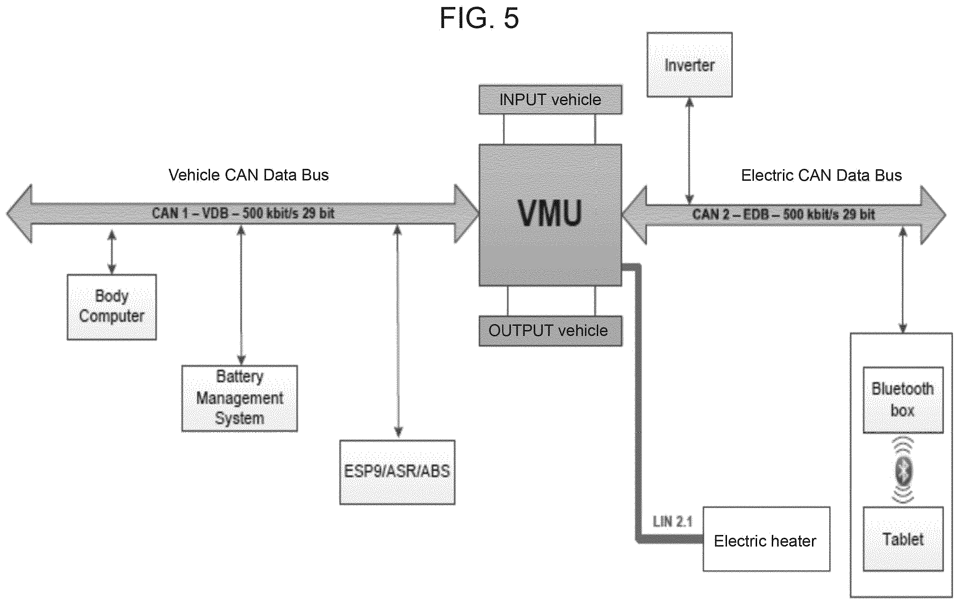

    figure 5 shows a vehicle data network, which is managed by a processing unit VMU, which is configured to implement the method according to the invention

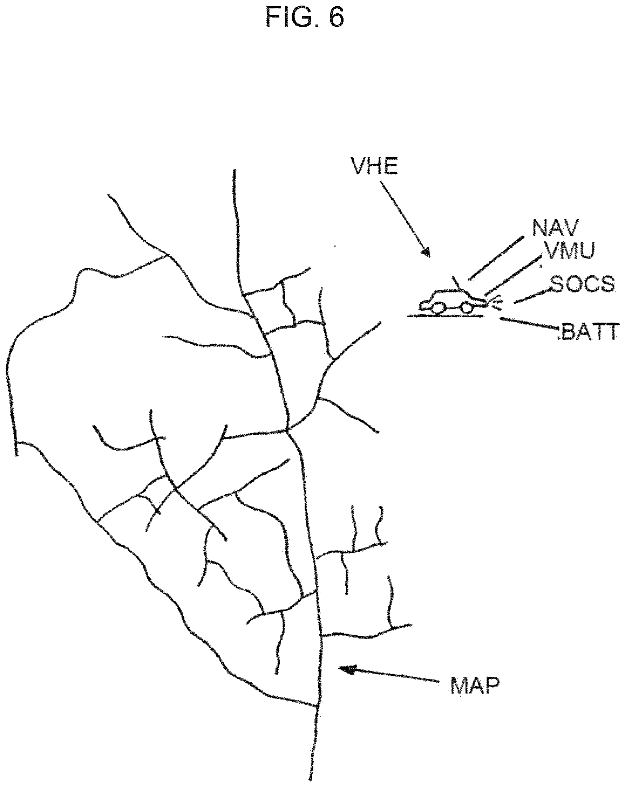

    figure 6 shows a map stored in a vehicle navigator NAV of an electric vehicle VHE comprising the vehicle navigator; the electric vehicle comprises a vehicle processing unit VMU, a battery BATT or a battery pack and sensors SOCS to measure the state of charge of the batteries, which are interfaced with said processing unit VMU.

In the figures, the same numbers and the same reference letters indicate the same elements or components.

For the purposes of the invention, the term "second" component does not imply the presence of a "first" component. As a matter of fact, these terms are only used for greater clarity and should not be interpreted in a limiting manner.

Detailed description of embodiments

According to the invention, after having acquired a destination, at least one route is calculated, regardless of whether it is the fastest or the shortest one.

The shortest one usually leads to the smallest energy consumption possible.

A route can involve a total altimetry variation. If it has a positive value, then a total percentage slope can be calculated and, from the latter, a first corrective factor Z1 is obtained. This coefficient is used to correct the length of the path associated with the entire route.

In other words, assuming that you have a total path with a length of 10 km and a positive gradient of 0.5%, you obtain a corrective coefficient Z1 that is greater than zero and elongates said length up to 10.5 km. This difference is the one used to check whether the residual energy of the batteries of the vehicle is sufficient - or not - to reach said predetermined destination.

The route can have road sections with transitory altimetry variations, i.e. having a zero resultant. In other words, you can identify a starting point and an end point of each one of said road sections having a same height/altitude.

This leads to an extra-consumption of energy, which is hardly entirely recovered when driving downhill.

Therefore, the length of the road section of route that lead to a transitory altimetry variation may be preferably corrected, in addition, by means of a further corrective coefficient Z2, which is a function of the positive value of said local altimetry variation with a zero resultant.

Supposing you drive uphill for 1 km with a mean slope of 2% and then you drive downhill to reach again the same height as the one you had before the 1 km uphill road, a positive value of 2% is acquired and, from the latter, a corrective coefficient Z2 is obtained, which is greater than zero and elongates said length up to 1.2 km.

Statistics have shown that, even tough a shorter path is corrected, it is always shorter than a faster path corrected by means of the same principles described above.

A faster path, as it is known, allows you to reach the destination in a smaller time, even though said path - per se - is not the shortest one.

On the other hand, a shorter path does not necessarily allow you to reach a destination in the smallest time.

Therefore, the fastest route is the one that leads to the smallest travel time. On the contrary, the shortest route is the one that leads to the smallest consumption of energy.

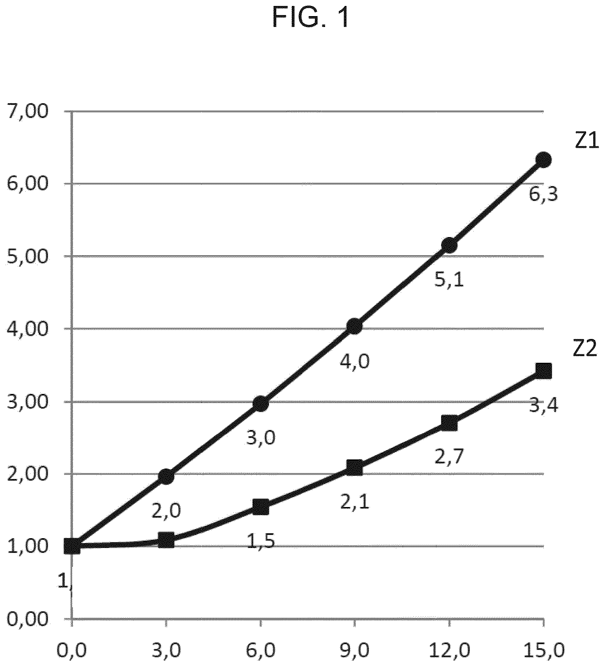

Figure 1 shows a development of the coefficients Z1 and Z2 as a function of the positive percentage slope.

Owing to the above, Z1 only considers the contribution of the total uphill road to the consumption of energy and it does not take into account a possible recovery while driving downhill.

Z2, on the contrary, also considers the downhill contribution, but only for those road sections in which an altimetry variation has an initial height equal to the final one.

It can occur that, in one single road section, for example, you drive uphill for 8 metres and downhill for 6 metres.

This means that the corrective coefficient Z2 is only applied to the length of path corresponding to the altimetry variation of 6 metres, whereas the path portion corresponding to the altimetry variation of the remaining 2 metres is considered in the total correction operated on the entire route by means of the coefficient Z1, only if said variation is positive.

The same example also applies to when the opposite happens, namely in a situation with a 6-metre uphill road and then an 8-metre downhill road. The sole length of the road section subtended by the 6-metre variation is considered for the application of the corrective coefficient Z2. The remaining 2 metres are not taken into account.

It should be clear that advantages can be obtained by applying even a single one of the two corrective coefficients Z1 and Z2, even if the application of the sole corrective coefficient Z2 makes not part of the invention. However, it is also clear that the best results for the estimation of the ability of the vehicle to cover a predetermined route are obtained by applying them together, as set forth in the description above.

Whereas Z1 has a linear development, Z2 has a parabolic development and, if you consider figure 1, you can clearly see that Z1 prevails in case of low slopes, while Z2 prevails in case of high slopes.

However, it should be taken into account that Z1 is applied to the entire path, whereas Z2 is applied to portions thereof, often small ones.

Therefore, the fact that Z1 is more significant that Z2 and vice versa depends on the starting point, on the destination and on the type of route selected.

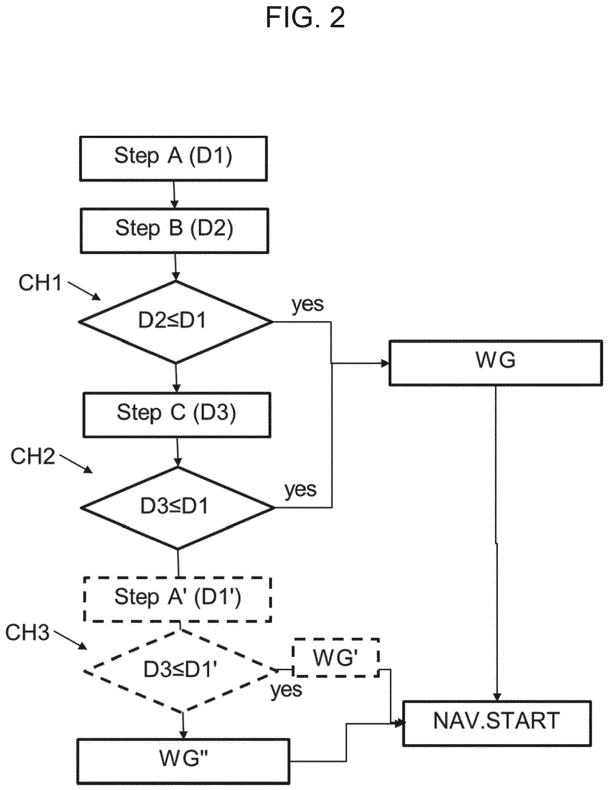

Figure 2 shows a flowchart through which the driver of an electric vehicle is offered the chance to reach a predetermined destination having a clear idea of whether and how many stops will be necessary to charge the batteries.

In particular,

- (Step A) the residual range (D1) of the electric vehicle is estimated,
- (Step B) a first route is calculated, preferably a faster route, namely a route with a minimum journey time, for a predetermined destination; then, when a first distance D2 to be covered, corresponding to said first route, is smaller than or equal to said first residual range D1,
- (CH1:yes) a first message (WG) is shown to the driver concerning the fact of reaching said destination by means of said first route and a relative estimated journey time and a step (NAV.START) of starting the navigation along said faster route; if, on the other hand, said distance is greater than said residual range, then
- (CH1:no) calculation (Step C) of a route with minimum consumption, which is corrected by means of said first and/or second corrective coefficient; then, if a second distance D3 to be covered corresponding to said route with minimum consumption is smaller than said residual range D1,

- (CH1:yes) a first message (WG) is shown to the driver concerning the fact of reaching said destination by means of said route with minimum consumption and a relative estimated journey time and a step (Step NAV.START) of starting a navigation along said first route with minimum consumption; if, on the other hand, said distance is greater than said residual range,
- optionally (CH2:no) (Step A') a second residual range D1' in eco-drive conditions is calculated; then, if said second distance (D3) with minimum consumption, which is corrected by means of said first and/or second corrective coefficient, is smaller than or equal to said second residual range D1'
- (CH3: yes) a second message (WG') is shown that informs the driver of the electric vehicle that, in order to reach said predetermined destination, it is necessary to go on in eco-drive mode and a step of starting (NAV.START) a navigation along said first route in eco-drive mode or
- (CH3:no) a third message (WG'') is shown that informs the driver of the electric vehicle that, in order to reach said predetermined destination, it is necessary to make at least one stop to charge the batteries and a step of starting (NAV.START) a navigation along said first route in normal mode.

Since, anyway, at least one stop needs to be made in order to charge the batteries, it is preferable to start the navigation in normal made, namely non in eco-drive mode, with all the aids in an active condition and with the motor capable of delivering its maximum power.

With reference to figure 2, the checks described above are identified with CH1, CH2 and CH3.

It should be pointed out that, in the aforesaid comparisons, it is preferable to consider a guard margin, for example 10 or 20 km. Therefore, the residual range of the vehicle is compared with the distance to be covered, to which said guard margin is added.

Preferably, the estimation of the residual range is carried out by the VMU (Vehicular control unit), which is a vehicle processing unit that usually controls the on-board systems, both safety systems, such as ESP, ABS, etc., and comfort systems, such as the heater of the cabin, the infotainment system.

The latter further includes the sound system, the vehicle navigation system and other possible systems, such as - for example - the interface to a smartphone, so as to make and receive phone calls, etc..

The VMU is connected to known sensors, which allow it - among other things - to know the instantaneous speed of the vehicle, the position of the pedals, the state of charge of the vehicle batteries.

Since the VMU and the infotainment system comprising the vehicle navigator NAV are interfaced with one another so as to exchange information, the method according to the invention is preferably implemented by means of the infotainment system itself, and in particular by the application defining the vehicle navigator. Other hardware/software configurations are admissible.

Preferably, when the navigator shows the aforesaid messages WG, WG', the journey time is indicated and, if one or more battery charging stops are needed, said time is increased by the charging time, taking into account the features of the charging stations. As a matter of fact, it is known that the energy that can be delivered by the charging stations can vary.

Preferably, the driver is allowed to decide whether to choose the navigation through the fastest path or the path with minimum consumption or the path with minimum consumption in eco-drive mode.

The navigator comprises, as it is known, a memory where there are stored, in a persisting manner or on-demand, road maps consisting in a set of routes. Furthermore, each route is associated with features, such as type of road, speed limits, height variations, toll booths, presence of horizontal and/or vertical signals, etc.. When a destination is selected, the navigator, by means of known algorithms, calculates the fastest path and/or the path with minimum consumption. The latter, according to known navigators, usually coincides with the shortest path. As described below, this is not always true according to the invention.

In particular, the calculation algorithms are not changed, but the features associated with the single routes are changed, with the result that, even though their calculation algorithms are left unchanged, the routes can turn out to be significantly different.

Preferably, both the route with minimum consumption and the fastest route are calculated also taking into account possible height variations along the route.

The journey time, net of possible charging stops, for the aforesaid selected routes remains unchanged, but the total journey time, which also includes possible stops, is calculated taking into account a possible increase due to the times needed to charge the batteries as a consequence of the extra-consumption deriving from the virtual elongation of the routes having at least one portion with positive gradient.

Preferably, the navigator, besides comprising maps as well as information on the types of roads, differences in height, etc., also comprises information of the location of the battery charging stations. According to a preferred embodiment of the invention, the memory means of the navigator, for example a solid-state storage, also include information concerning the charging stations located along the previously calculated routes and, in particular, the power that can be delivered to each charging vehicle and, hence, the navigator adjusts the aforesaid calculation of the journey times based on the actual charging time, which is an inverse function of said deliverable power and a direct function of the capacity of the batteries installed on board the vehicle.

According to a further preferred embodiment of the invention, which can be combined with the previous ones, the navigator comprises a telematics connection, if necessary also used to acquire said one-demand maps and said information on the charging stations, and, when the driver selects the preferred type of path, if it needs at least one charging stop, the navigator is configured to proceed automatically, if the charging station allows it to do so, to book a charging position for the time in which the station will be reached by the vehicle.

Preferably, each charging station receives a booking request and compares said request with its availability. If the request can be met, the booking is confirmed and the station sends a positive message to the navigator, otherwise it communicates the minimum amount of time needed to have charging column available.

At this point the navigator can inquire another charging station or confirm the booking with said delayed availability.

The possible delay due to the availability of a charging column is added to the total journey time and shown to the driver.

According to a further preferred embodiment of the invention, during the calculation of said journey times according to the fastest route and the route with minimum consumption, the navigator inquires the charging stations beforehand and updates the journey times before the route is selected.

Like in known navigation systems, the driver can set, among the criteria of selection of the routes by the navigator, his/her preferences in terms of types of roads, payment of tolls or lack thereof, etc. and, in particular, he/she can select the route with minimum consumption or the fastest route as preferred route.

Anyway, the confirmation of the charge booking is done after the selection of the route by the driver. The method of interaction between the vehicle navigator and the charging station is part of the subject-matter of the invention, as well.

According the invention, which is shown with the support of figures 2 - 4, the residual range comprises, in a cyclic succession,

- acquisition of a residual energy contained in the vehicle batteries,
- calculation of a residual range A_R as ratio of residual energy E divided by a pre-calculated coefficient of consumption per kilometre DK and calculation of a residual drain time R of the vehicle batteries as ratio of said residual range A_R divided by a speed S of the vehicle,
- identification of a corrective parameter K of said value of residual energy E, function of said residual drain time R,
- acquisition of said residual energy E and correction of the same by means of said corrective parameter K.

Through the residual drain time of the batteries you can identify a corrective coefficient to be applied to said residual energy in a subsequent calculation cycle. Therefore, the calculation of the residual range is carried out in a recursive manner, with the execution of steps in cyclic succession.

The corrective coefficient K of the residual energy is identified by means of the aforesaid residual drain time, which allows you to correct the residual energy of the vehicle batteries estimated in a known manner.

Preferably, rather than implementing instantaneous values of speed and residual energy, samplings are carried out and the relative mean values are calculated.

The estimation of the mean speed is way more precise than the estimation of the variation of the SOC in the same time interval; as a consequence, the method according to the invention is significantly more precise and sensitive compared to the ones of the prior art, as it allows you to better calculate the residual drain time and, therefore, to have a more realistic estimation of the residual range.

Preferably, the aforesaid calculations are carried out by means of a sampling of the speed of the vehicle and of the residual energy of the vehicle batteries, not in terms of time, but in terms of distance covered. Therefore, the sampling can be performed, for example, every 100 m or every 1000 m, etc..

Preferably, the aforesaid value of consumption per kilometre is obtained not taking into account the energy consumed by any other on-board service, including the heating of the vehicle cabin.

Hence, the residual drain time is substantially calculated based on the sole "driving" consumption, whereas the consumption of on-board services is taken into account in a less precise manner through the acquisition of the classic parameter SOC.

According to a preferred embodiment of the invention, the aforesaid calculations are carried on mean values of speed S_E and residual energy E_E stored in the batteries.

According to a preferred embodiment of the invention, the sampling is carried out on the distance covered, namely every N metres covered by the vehicle, for example every 100m or 200m or 500m, etc..

With every sampling step, an instantaneous speed S of the vehicle and a residual energy E of the vehicle batteries are acquired.

Said residual energy can be obtained, for example, by means of the aforesaid parameter SOC, which is provided by proper means monitoring the state of charge of the batteries. Said parameter is known.

Every Z samplings, for example every 2 or 3 or 10 samplings, the mean speed S_E of the vehicle and a mean residual energy E_E of the vehicle batteries are calculated.

The residual energy value E_E is divided by a coefficient of consumption per kilometre DK, thus obtaining a residual range value A_R, therefore A_R = E_E/DK.

By dividing said residual range A_R by said mean speed S_E, you obtain a a drain speed R of the vehicle batteries. Therefore, R = A_R/S_E which represents a complete drain time of the batteries.

Through said value R, you can identify the most appropriate K value.

| R | K |
|---|---|
| 1h | 0.78 |
| 2h | 0.89 |
| 3h | 0.92 |
| 4h | 0.94 |
| 5h | 0.95 |
| 8h | 0.97 |

If necessary, even through linear interpolation.

Therefore, after the Z successive samples, the residual charge is calculated multiplying it by K.

In order to avoid overly optimistic estimations at the beginning of the execution of the method, the initial residual charge is preferably multiplied by a mean K value, which preferably coincides with the one implying a complete drain in 4 hours, K(4).

Evidently, the method according to the invention can be re-initialized after a vehicle battery charging operation and/or after the turning off of the vehicle.

According to a preferred embodiment of the invention, the number of charges is stored in order to also estimate the fading of the capacity of the vehicle batteries to store energy by means of an aging coefficient KA, which reduces the nominal capacity of the batteries by approximately 1% every 100 charging operations.

With reference to figure 2, a preferred embodiment of the method comprises the following steps:

- Step 1: initialization of the method: K = K(4) is established and the coefficient of consumption per kilometre DK is acquired;
- Step 2: Calculation of the residual energy

$$E = (SOC*(E\_N - KA) * K),$$

wherein E_N is the nominal capacity of the vehicle batteries,

- Step 3: sampling of Ei = (SOCi * (E_N-KA) * K) and Si, wherein i = 0 - Z and every sample is sampled every N metres covered by the vehicles,
- Step 4: Calculation of E_E and S_E on said Z samples,
- Step 5: Calculation of the residual range A_E = E_E/DK and of the residual drain time R = A_R/S_E,

- Step 6: identification of K and back to Step 2.

It is evident that, after the first cycle in which K = K(4), the most appropriate K is selected.

Since the coefficient of consumption per kilometre DK is pre-calculated, for convenience it is associated with a preliminary step: Step 0.

Said coefficient of consumption per kilometre DK, expressed in kWh per kilometre (or - equally - in VAh/km) is obtained experimentally with experimental tests carried out on a specific vehicle and stored in a proper non-volatile memory of a processing unit used for the calculation of the residual range.

Preferably, said coefficient DK is a mean of different load condition of the vehicle. Luckily, it turned out that said changes of load, meant as weight, do not affect very much the coefficient DK.

Preferably, said tests are carried out keeping the other on-board loads/services turned off.

If the vehicle can also run in an eco-drive configuration, the experimental tests are also carried out reducing the deliverable power and, hence, the electric absorption of the driving motor.

In this case, a further coefficient of consumption per kilometre is calculated and stored.

According to a preferred embodiment of the invention, the coefficient of consumption per kilometre is updated with every charging cycle of the batteries. In particular, given the energy spent between two charges and the corresponding kilometres covered, a new coefficient DK' is calculated.

If necessary, said new coefficient is properly weighed and added to the coefficient DK of the previous step, which is also weighed. Advantageously, using a high weight (alfa) for the coefficient DK and a low weight (beta) for DK', the actually used coefficient alfa*DK+beta*DK' slowly changes in time, without risking an excessive alteration of the result of the calculation algorithm after specific negative events, such as for example excessively long uphill roads or a strong contrary wind, etc..

The same concept can also be applied both to the vehicle in standard conditions and to the vehicle in eco-drive conditions.

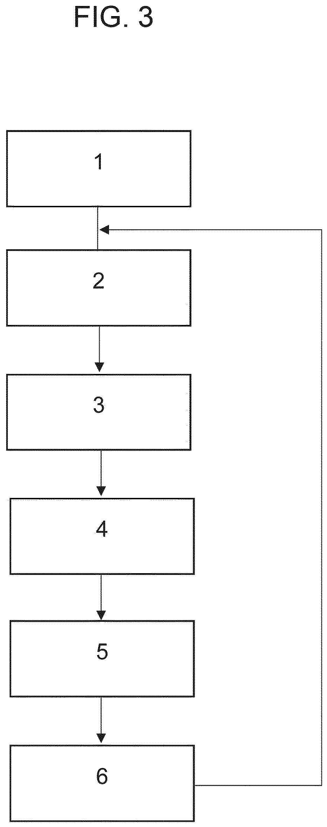

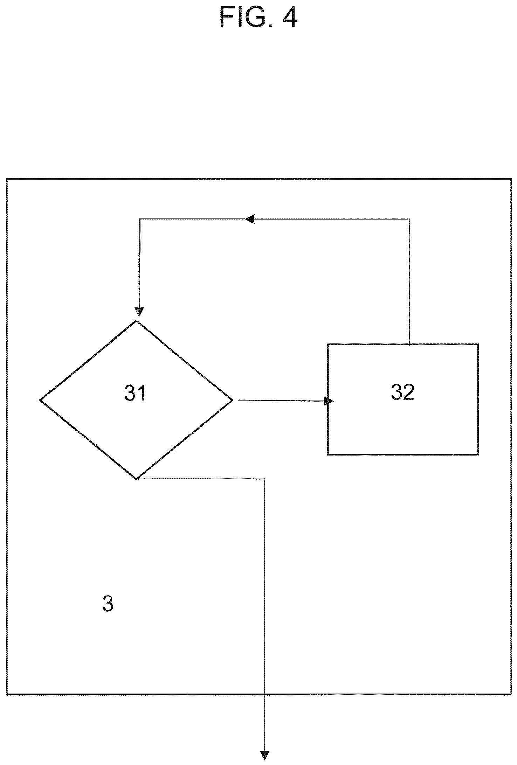

Figure 4 shows in detail block 3 of figure 3, which corresponds to the aforesaid step 3.

Block 31 comprises a control of the number of samples sampled and of the distance covered; in other words, if the distance covered is greater than N, you move on to step 32, in which the sampling of Si and Si is carried out. This is repeated as long as the index "i" is equal to Z, which is when the control ends and you can move on to block 4, to which the 2 *Z samples are sent.

According to a preferred embodiment of the invention, during the calculation of the residual energy, in the execution of step 2, a further guard coefficient SOCG is included, which further reduces the estimation of the residual charge of the batteries, so as to ensure a sufficient level of guard, which is preferably set between 0.15 and 0.2.

Obviously, in the aforesaid equations, the SOC is used in 0 - 1 form and not in a percentage form.

The processing unit used for the aforesaid calculation of the residual range preferably is the VMU, but it is also possible that all processing operations are carried out by the navigator itself, which, for example, is made up of a tablet or a smartphone, where a suitable application (App) is installed and which is properly interfaced with the on-board data network through cable or wireless.

Figure 4 shows an example of a vehicle data network where a VMU interconnects two CAN networks, CAN 1 and CAN 2. The first CAN1 is dedicated to the management of on-board systems, such as ESP, ABS, on-board computer and battery monitoring system, whereas line 2 connects user devices and the driving inverter, which powers at least one driving electric motor.

This invention can be advantageously implemented by means of a computer program comprising coding means for carrying out one or more steps of the method, when the program is run on a computer. Therefore, the scope of protection is extended to said computer program and, furthermore, to means that can be read by a computer and comprise a recorded message, said means that can be read by a computer comprising program coding means for carrying out one or more steps of the method, when the program is run on a computer.

The non-limiting example described above can be subjected to variations, without for this reason going beyond the scope of protection of the invention, which is defined by claims.

**Claims**

1. A navigation support method of an electric vehicle comprising

    - a step (Step A) of estimating a residual range (D1, D1') of the electric vehicle,
    - a step of calculating (Step B) a first route for a predetermined destination and a first distance of said first route (D2, D3) to be covered,
    - and a step of comparing said residual range with said first distance,
    wherein the first route involves a total altimetry variation,
    the method being **characterized by** further comprising the step of multiplying a value of said first distance by a corrective coefficient (Z1), which is a function of said total
    altimetry variation of the first route, wherein said estimation step (Step A/Step A') of the residual range (D1) of the electric vehicle comprises:

        - (Step 2') acquisition of a residual energy (E = SCO * E_N) stored in vehicle batteries, and

cyclic execution of the following steps:

- (Step 5) calculation of the residual range (A_R) of the electric vehicle as ratio of the residual energy (E) divided by a pre-calculated coefficient of consumption per kilometre (DK) and calculation of a residual drain time (R) of the vehicle batteries as ratio of the residual range (A_R) divided by a speed (S) of the electric vehicle,
- (Step 6) identification of a corrective parameter (K) of said value of residual energy (E) as a function of said residual drain time (R),
- (Step 2) acquisition of said residual energy (E) and correction of the same by means of said corrective parameter (K).

2. A method according to claim 1, wherein said corrective coefficient is obtained from a linear function of the altimetry variation of said first distance.

3. The method according to any one of the preceding claims 1 - 2 further comprising:

- a step of checking whether a corrected distance of said first route, which is corrected by means of said corrective coefficient, is smaller than or equal to said residual range and in case of a positive answer
- (CH1:yes) a step of showing a first message (WG) to the driver concerning the fact of reaching said destination by means of said first route and a relative estimated journey time and a step of starting (NAV.START) a navigation along said first route; if, on the other hand, said corrected distance is greater than said residual range, then
- (CH1:no) a step of calculating (Step C) a route with minimum consumption, which is corrected by means of said corrective coefficient; then, if a second distance (D3) to be covered corresponding to said route with minimum consumption is smaller than or equal to said residual range (D1),
- (CH2:yes) a step of showing a first message (WG) to the driver concerning the fact of reaching said destination by means of said route with minimum consumption and a relative estimated journey time and a step of starting (NAV.START) a navigation along said route with minimum consumption, otherwise
- optionally (CH2:no) calculation (Step A') of a further residual range (D1') in eco-drive conditions; then, if said second distance (D3) with minimum consumption, which is corrected by means of said corrective coefficient, is smaller than or equal to said further residual range (D1')
- (CH3: yes) a step of showing a second message (WG') that informs the driver of the electric vehicle that, in order to reach said predetermined destination, it is necessary to go on in eco-drive mode and a step of starting (NAV.START) a navigation along said first route in eco-drive mode or
- (CH3:no) a step of showing a third message (WG'') that informs the driver of the electric vehicle that, in order to reach said predetermined destination, it is necessary to make at least one stop to charge the batteries and a step of starting (NAV.START) a navigation along said first route in normal mode.

4. The method according to claim 3, wherein said third message (WG'') comprises the following information:

- a first estimated journey time, including a stop time to charge the batteries.

5. The method according to claim 4 and further comprising a step of inquiring about the availability of a charging station and including a possible waiting time to be waited in order to access to the relative charging services in a calculation of said journey time.

6. The method according to one of the preceding claims 3 - 5, wherein, when at least one charging stop is expected, said step of starting (NAV.START) said navigation comprises a step of booking a charge in a predetermined charging station along said route.

7. The method according to any of the claims 1-6, wherein said correction of the residual energy (E) is obtained by means of the following equation $E = (SOC* E\_N * K)$, where $E\_N$ is the rated capacity of the vehicle batteries, SOC is a coefficient of state of charge and K the aforesaid predetermined corrective parameter function of said residual drain time (R).

8. The method according to any of the claims 1-7, wherein said coefficient of consumption per kilometre expresses an energy consumption per kilometre calculated and averaged on tests with different charge conditions of the electric vehicle.

9. The method according to claim 8, wherein said tests provide for the deactivation of any other loads on board (CAN 2) and wherein said calculation of said residual range (A_R) and of said residual drain time (R) of the vehicle batteries is implemented on mean values of residual energy (E_E) and of vehicle speed (S_E) on a predefined number of samples (Z).

10. The method according to claim 9, wherein a sampling step is defined by a predefined third distance (N) travelled by the vehicle.

11. The method according to any one of the preceding claims from 1 to 10, wherein said acquisition and correction (Step 2) of said residual energy (E) comprises a step of further correcting said value of residual energy based on a deterioration coefficient (KA) of the storage capacity of the vehicle batteries based on a number of charge cycles thereof.

12. The method according to claim 11, wherein said residual energy is equal to E = (SOC*(E_N - KA) * K), where E_N is the rated capacity of the vehicle batteries, SOC is a coefficient of state of charge, KA the aforesaid deterioration coefficient and K the aforesaid corrective parameter function of the residual drain time (R) of the batteries of the electric vehicle.

13. A navigation support device (NAV) of an electric vehicle, the vehicle having a battery pack and at least one electric motor cooperating with a vehicle transmission and a first processing unit (VCU) configured to estimate a residual range (D1) of the electric vehicle, the device (NAV) comprising

    - means for acquiring said estimate of said residual range from said first processing unit (VCU),
    - memory means in which there are stored road sections and related information, such as length, speed limits and gradients,
    - means for acquiring a destination,
    - processing means configured to carry out all the steps of any one of the claims from 1 to 12.

14. An electric vehicle comprising a battery pack and at least one electric motor cooperating with a vehicle transmission and a device (VMU) for estimating a first residual range of an electric vehicle according to claim 13.

**Patentansprüche**

1. Ein Verfahren zur Navigationsunterstützung eines Elektrofahrzeugs, umfassend:

    - einen Schritt (Schritt A) des Schätzens einer verbleibenden Reichweite (D1, D1') des Elektrofahrzeugs,
    - einen Schritt (Schritt B) des Berechnens einer ersten Route zu einem vorgegebenen Ziel und einer ersten Entfernung dieser Route (D2, D3),
    - und einen Schritt des Vergleichens der verbleibenden Reichweite mit der ersten Entfernung,

wobei die erste Route eine Gesamthöhenänderung aufweist und das Verfahren **dadurch gekennzeichnet ist, dass** es ferner den Schritt umfasst, den Wert der ersten Entfernung mit einem Korrekturfaktor (Z1) zu multiplizieren, der eine Funktion der Gesamthöhenänderung der ersten Route ist, wobei der Schritt des Schätzens (Schritt A/Schritt A') der verbleibenden Reichweite (D1) des Elektrofahrzeugs umfasst:

    - (Schritt 2') Erfassen einer verbleibenden Energiemenge (E = SOC * E_N), die in Fahrzeugbatterien gespeichert ist, und

zyklisches Ausführen der folgenden Schritte:

    - (Schritt 5) Berechnen der verbleibenden Reichweite (A_R) des Elektrofahrzeugs als ein Verhältnis der verbleibenden Energie (E) geteilt durch einen vorkalkulierten Verbrauchskoeffizienten pro Kilometer (DK) und Berechnen einer verbleibenden Entladezeit (R) der Fahrzeugbatterien als ein Verhältnis der verbleibenden Reichweite (A_R) geteilt durch eine Geschwindigkeit (S) des Elektrofahrzeugs,
    - (Schritt 6) Bestimmen eines Korrekturparameters (K) der verbleibenden Energie (E) als Funktion der verbleibenden Entladezeit (R),
    - (Schritt 2) Erfassen der verbleibenden Energie (E) und Korrigieren derselben den durch Korrekturparameter (K).

2. Das Verfahren nach Anspruch 1, wobei der Korrekturfaktor aus einer linearen Funktion der Höhenänderung der ersten Route berechnet wird.

3. Das Verfahren nach einem der vorhergehenden Ansprüche 1 bis 2, ferner umfassend:

    - einen Schritt des Überprüfens, ob eine korrigierte Entfernung der ersten Route, die durch den Korrekturfaktor korrigiert wurde, kleiner oder gleich der verbleibenden Reichweite ist und im Falle einer positiven Antwort
    - (CH1: ja): einen Schritt des Anzeigens einer ersten Nachricht (WG) an den Fahrer über die Tatsache, dass das besagte Ziel mit der ersten Route erreicht werden kann und eine relative geschätzte Reisezeit, und einen Schritt des Startens (NAV. START) einer Navigation entlang der ersten Route; falls andererseits der korrigierte Abstand größer ist als der Restbereich:

        - (CH1: nein): einen Schritt des Berechnens (Schritt C) einer Route mit minimalem Energieverbrauch, die durch den Korrekturfaktor korrigiert ist; dann, falls eine zweite zu absolvierende Entfernung (D3), die der Route entspricht, kleiner oder gleich der verbleibenden Reichweite (D1) ist:

- (CH2: ja) einen Schritt des Anzeigens einer ersten Nachricht (WG) an den Fahrer über die Tatsache, dass das Ziel über die Route mit minimalem Verbrauch erreicht werden kann, und eine relative geschätzte Reisezeit, und einen Schritt zum Starten (NAV.START) einer Navigation entlang der Route mit minimalem Verbrauch, andererseits
- alternativ (CH2: nein): Berechnen (Schritt A') einer weiteren verbleibenden Reichweite (D1') unter Eco-Drive-Bedingungen; dann, falls die zweite Entfernung (D3) mit minimalem Verbrauch, die durch den Korrekturfaktor korrigiert ist; kleiner oder gleich der neuen verbleibenden Reichweite (DI') ist,
- (CH3: ja): einen Schritt des Anzeigens einer zweiten Nachricht (WG'), die den Fahrer des Elektrofahrzeugs informiert, dass, um das vorbestimmte Ziel zu erreichen, ein Wechsel in den Eco-Drive-Modus notwendig ist, und einen Schritt des Startens (NAV. START) einer Navigation entlang der ersten Route im Eco-Drive-Modus, oder
- (CH3: nein): einen Schritt des Anzeigens einer dritten Nachricht (WG"), die den Fahrer des Elektrofahrzeugs informiert, dass zumindest ein Halt, um die Batterien zu laden, notwendig ist, und einen Schritt des Startens (NAV. START) einer Navigation entlang der ersten Route im normalen Modus.

4. Das Verfahren nach Anspruch 3, wobei die dritte Nachricht (WG"), die folgende Information umfasst:

- eine erste geschätzte Reisezeit, die eine Haltedauer, um die Batterien zu laden, umfasst.

5. Das Verfahren nach Anspruch 4, ferner umfassend einen Schritt des Abfragens einer Verfügbarkeit einer Ladestation, und umfassend eine mögliche abzuwartende Wartezeit, um auf den relativen Ladeservices in einer Berechnung der Reisezeit zuzugreifen.

6. Das Verfahren nach einem der Ansprüche 3 - 5, wobei, wenn mindestens ein Ladestopp zu erwarten ist, der Schritt des Startens der Navigation (NAV.START) einen Reservierungsschritt für eine vorbestimmte Ladestation entlang der Route umfasst.

7. Das Verfahren nach einem der Ansprüche 1 - 6, wobei die Korrektur der verbleibenden Energie (E) durch die Gleichung $E = (SOC * E\_N * K)$ erfolgt, wobei E_N die Nennkapazität der Fahrzeugbatterien, SOC ein Ladezustandskoeffizient und K der zuvor genannte Korrekturparameter als Funktion der verbleibenden Entladezeit (R) ist.

8. Das Verfahren nach einem der Ansprüche 1 - 7, wobei der Verbrauchskoeffizient pro Kilometer einen, basierend auf Tests mit verschiedenen Ladezuständen des Fahrzeugs, berechneten und gemittelten durchschnittlichen Energieverbrauch pro Kilometer darstellt.

9. Das Verfahren nach Anspruch 8, wobei die Tests das Deaktivieren aller anderen Verbraucher an Bord (CAN 2) umfassen und wobei das Berechnen der verbleibenden Reichweite (A_R) und der verbleibenden Entladezeit (R) der Fahrzeugbatterien auf Mittelwerten der verbleibenden Energie (E_E) und der Fahrzeuggeschwindigkeit (S_E) basiert, die auf einer vordefinierten Anzahl von Messwerten (Z) ermittelt wurden.

10. Das Verfahren nach Anspruch 9, wobei ein Messintervall durch eine vordefinierte dritte Strecke (N) festgelegt wird, die das Fahrzeug zurücklegt.

11. Das Verfahren nach einem der vorhergehenden Ansprüche 1 bis 10, wobei der Schritt des Erfassens und Korrigierens (Schritt 2) der verbleibenden Energie (E) ferner einen Schritt des Korrigierens der verbleibenden Energie auf Grundlage eines Verschleißkoeffizienten (KA) der Speicherkapazität der Fahrzeugbatterien, basierend auf der Anzahl von Ladezyklen, umfasst.

12. Das Verfahren nach Anspruch 11, wobei die verbleibende Energie durch die Gleichung $E = (SOC * (E\_N - KA) * K)$ beschrieben wird, wobei E_N die Nennkapazität der Batterien, SOC ein Ladezustandskoeffizient, KA der oben genannte Verschleißkoeffizient und K der oben genannte Korrekturparameter in Abhängigkeit von der verbleibenden Entladezeit (R) ist.

13. Eine Navigationsunterstützungsvorrichtung (NAV) für ein Elektrofahrzeug, wobei das Fahrzeug ein Batteriepack und mindestens einen Elektromotor umfasst, der mit einem Fahrzeuggetriebe und einer ersten Recheneinheit (VCU), die eingerichtet, eine verbleibende Reichweite (D1) zu schätzen, zusammenarbeitet wobei die Vorrichtung (NAV) umfasst:

- Mittel zum Erfassen der geschätzten verbleibenden Reichweite aus der ersten Recheneinheit (VCU),
- Speichermittel, in denen Straßenabschnitte und verwandte Informationen, wie Längen-, Geschwindigkeits- und Steigungsinformationen, gespeichert sind,
- Mittel zum Erfassen eines Zielorts,
- Recheneinheiten, die eingerichtet sind, um alle Schritte eines der Ansprüche 1 bis 12 ausführen zu können.

14. Ein Elektrofahrzeug, umfassend ein Batteriepack und mindestens einen Elektromotor, der mit einem Fahrzeuggetriebe und einer Vorrichtung (VMU) zum Schätzen einer ersten verbleibenden Reichweite gemäß Anspruch 13, zusammenarbeitet.

## Revendications

1. Méthode de support de navigation d'un véhicule électrique comprenant

- une étape (étape A) d'estimation d'une autonomie résiduelle (D1, D1') du véhicule électrique,
- une étape de calcul (étape B) d'un premier itinéraire pour une destination prédéterminée et d'une première distance dudit premier itinéraire (D2, D3) devant être parcou1224rue,
- et une étape de comparaison de ladite autonomie résiduelle avec ladite première distance, dans laquelle le premier itinéraire implique une variation d'altimétrie totale, la méthode étant **caractérisée en ce qu'**elle comprend en outre l'étape de multiplication d'une valeur de ladite première distance par un coefficient correcteur (Z1), qui est une fonction de ladite variation d'altimétrie totale du premier itinéraire, dans laquelle ladite étape d'estimation (étape A/étape A') de l'autonomie résiduelle (D1) du véhicule électrique comprend :

- (étape 2') l'acquisition d'une énergie résiduelle ($E = SCO * E\_N$) stockée dans des batteries de véhicule, et l'exécution cyclique des étapes suivantes :

- (étape 5) le calcul de l'autonomie résiduelle (A\_R) du véhicule électrique en tant que rapport de l'énergie résiduelle (E) divisée par un coefficient de consommation par kilomètre (DK) précalculé et le calcul d'un temps d'épuisement résiduel (R) des batteries de véhicule en tant que rapport de l'autonomie résiduelle (A\_R) divisée par une vitesse (S) du véhicule électrique,

- (étape 6) l'identification d'un paramètre correcteur (K) de ladite valeur d'énergie résiduelle (E) en fonction dudit temps d'épuisement résiduel (R),
- (étape 2) l'acquisition de ladite énergie résiduelle (E) et la correction de celle-ci au moyen dudit paramètre correcteur (K).

2. Méthode selon la revendication 1, dans laquelle ledit coefficient correcteur est obtenu à partir d'une fonction linéaire de la variation d'altimétrie de ladite première distance.

3. Méthode selon l'une quelconque des revendications 1 et 2 précédentes comprenant en outre :

- une étape de vérification de si une distance corrigée dudit premier itinéraire, qui est corrigée au moyen dudit coefficient correcteur, est inférieure ou égale à ladite autonomie résiduelle et dans le cas d'une réponse positive
- (CH1:oui) une étape de présentation d'un premier message (WG) au conducteur concernant le fait d'atteindre ladite destination au moyen dudit premier itinéraire et un temps de trajet estimé associé et une étape de démarrage (NAV.START) d'une navigation le long dudit premier itinéraire ; si, en revanche, ladite distance corrigée est supérieure à ladite autonomie résiduelle, alors
- (CH1:non) une étape de calcul (étape C) d'un itinéraire à consommation minimale, qui est corrigé au moyen dudit coefficient correcteur ; puis, si une seconde distance (D3) devant être parcourue correspondant audit itinéraire à consommation minimale est inférieure ou égale à ladite autonomie résiduelle (D1),
- (CH2:oui) une étape de présentation d'un premier message (WG) au conducteur concernant le fait d'atteindre ladite destination au moyen dudit itinéraire à consommation minimale et un temps de trajet estimé associé et une étape de démarrage (NAV.START) d'une navigation le long dudit itinéraire à consommation minimale, dans le cas contraire
- facultativement (CH2:non) le calcul (étape A') d'une autonomie résiduelle supplémentaire (D1') dans des conditions de conduite écologique ; puis, si ladite seconde distance (D3) à consommation minimale, qui est corrigée au moyen dudit coefficient correcteur, est inférieure ou égale à ladite autonomie résiduelle supplémentaire (D1')
- (CH3:oui) une étape de présentation d'un deuxième message (WG') qui informe le conducteur du véhicule électrique qu'afin d'atteindre ladite destination prédéterminée, il est nécessaire de passer en mode de conduite écologique et une étape de démarrage (NAV.START) d'une navigation le long dudit premier itinéraire en mode de conduite écologique ou

- (CH3:non) une étape de présentation d'un troisième message (WG") qui informe le conducteur du véhicule électrique qu'afin d'atteindre ladite destination prédéterminée, il est nécessaire de faire au moins un arrêt pour recharger les batteries et une étape de démarrage (NAV.START) d'une navigation le long dudit premier itinéraire en mode normal.

4. Méthode selon la revendication 3, dans laquelle ledit troisième message (WG") comprend les informations suivantes :

   - un premier temps de trajet estimé, comportant un temps d'arrêt pour recharger les batteries.

5. Méthode selon la revendication 4 et comprenant en outre une étape de renseignement au sujet de la disponibilité d'une station de recharge et comportant un possible temps d'attente à attendre afin d'accéder aux services de recharge associés dans un calcul dudit temps de trajet.

6. Méthode selon l'une des revendications 3 à 5 précédentes, dans laquelle, lorsqu'au moins un arrêt de recharge est prévu, ladite étape de démarrage (NAV.START) de ladite navigation comprend une étape de réservation d'une recharge dans une station de recharge prédéterminée le long dudit itinéraire.

7. Méthode selon l'une quelconque des revendications 1 à 6, dans laquelle ladite correction de l'énergie résiduelle (E) est obtenue au moyen de l'équation suivante E = (SOC * E_N * K), où E_N est la capacité nominale des batteries de véhicule, SOC est un coefficient d'état de recharge et K la fonction de paramètre correcteur prédéterminé susmentionnée dudit temps d'épuisement résiduel (R).

8. Méthode selon l'une quelconque des revendications 1 à 7, dans laquelle ledit coefficient de consommation par kilomètre exprime une consommation d'énergie par kilomètre calculée et moyennée sur des tests avec des conditions de recharge différentes du véhicule électrique.

9. Méthode selon la revendication 8, dans laquelle lesdits tests incluent la désactivation de toute autre charge embarquée (CAN 2) et dans laquelle ledit calcul de ladite autonomie résiduelle (A_R) et dudit temps d'épuisement résiduel (R) des batteries de véhicule est mis en œuvre sur des valeurs moyennes d'énergie résiduelle (E_E) et de vitesse de véhicule (S_E) sur un nombre d'échantillons (Z) prédéfini.

10. Méthode selon la revendication 9, dans laquelle une étape d'échantillonnage est définie par une troisième distance (N) prédéfinie couverte par le véhicule.

11. Méthode selon l'une quelconque des revendications 1 à 10 précédentes, dans laquelle lesdites acquisition et correction (étape 2) de ladite énergie résiduelle (E) comprennent une étape de correction supplémentaire de ladite valeur d'énergie résiduelle sur la base d'un coefficient de dégradation (KA) de la capacité de stockage des batteries de véhicule sur la base d'un nombre de cycles de recharge de celles-ci.

12. Méthode selon la revendication 11, dans laquelle ladite énergie résiduelle est égale à E = (SOC * (E_N - KA) * K), où E_N est la capacité nominale des batteries de véhicule, SOC est un coefficient d'état de recharge, KA le coefficient de dégradation susmentionné et K la fonction de paramètre correcteur susmentionnée du temps d'épuisement résiduel (R) des batteries du véhicule électrique.

13. Dispositif de support de navigation (NAV) d'un véhicule électrique, le véhicule ayant un bloc-batterie et au moins un moteur électrique coopérant avec une transmission de véhicule et une première unité de traitement (VCU) configurée pour estimer une autonomie résiduelle (D1) du véhicule électrique, le dispositif (NAV) comprenant

   - des moyens pour acquérir ladite estimation de ladite autonomie résiduelle à partir de ladite première unité de traitement (VCU),
   - des moyens de mémoire dans lesquels sont stockées des sections de route et des informations associées, telles qu'une longueur, des limites de vitesse et des pentes,
   - des moyens pour acquérir une destination,
   - des moyens de traitement configurés pour effectuer toutes les étapes selon l'une quelconque des revendications 1 à 12.

14. Véhicule électrique comprenant un bloc-batterie et au moins un moteur électrique coopérant avec une transmission de véhicule et un dispositif (VMU) pour estimer une première autonomie résiduelle d'un véhicule électrique selon la revendication 13.

# FIG. 1

# FIG. 2

```
                    ┌─────────────────┐
                    │   Step A (D1)   │
                    └────────┬────────┘
                             │
                    ┌────────▼────────┐
                    │   Step B (D2)   │
                    └────────┬────────┘
                             │
        CH1                  │                    yes
                    ◇────────▼────────◇──────────────┐
                    ◇      D2≤D1       ◇              │      ┌─────────────────┐
                    ◇─────────────────◇              ├──────►       WG        │
                             │                       │      └────────┬────────┘
                    ┌────────▼────────┐              │               │
                    │   Step C (D3)   │              │               │
                    └────────┬────────┘              │               │
        CH2                  │                  yes  │               │
                    ◇────────▼────────◇──────────────┘               │
                    ◇      D3≤D1       ◇                              │
                    ◇─────────────────◇                              │
                             │                                       │
                    ┌ ─ ─ ─ ─▼─ ─ ─ ─ ┐                              │
                    │  Step A' (D1')  │                              │
                    └ ─ ─ ─ ─┬─ ─ ─ ─ ┘                              │
        CH3                  │         ┌ ─ ─ ─ ─┐                    │
                    ◇─ ─ ─ ─ ▼─ ─ ─ ─◇ │  WG'   │                   │
                    ◇     D3≤D1'       ◇ └ ─ ─ ─ ┘                   │
                    ◇─ ─ ─ ─ ─ ─ ─ ─ ◇     yes                      │
                             │                                       │
                    ┌────────▼────────┐          ┌──────────────────▼──┐
                    │       WG"       │──────────►     NAV.START        │
                    └─────────────────┘          └─────────────────────┘
```

# FIG. 3

# FIG. 4

# FIG. 5

## FIG. 6

**EP 3 798 579 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2015022555 A1

### Non-patent literature cited in the description

- Range estimator for electric vehicles. **MOURE et al.** proceedings of 2013 World Electric Vehicle Symposium and Exhibition (EVS27). IEEE, 17 November 2013, 1-15